# EUROPÄISCHE PATENTSCHRIFT

(11) **EP 3 403 783 B1**
(45) Veröffentlichungstag und Bekanntmachung des Hinweises auf die Patenterteilung: **10.09.2025**
(21) Anmeldenummer: 18000466.5
(22) Anmeldetag: 17.05.2018
(51) Int. Cl.: B27C 5/10, B27G 21/00, B23Q 5/04, B23Q 5/10, B23Q 11/00, B26D 1/08, B23Q 11/08

(54) **TEMPERATUR-ÜBERWACHUNGSEINRICHTUNG FÜR WERKZEUGSPINDELN SOWIE VERFAHREN UNTER VERWENDUNG EINER TEMPERATUR-ÜBERWACHUNGSEINRICHTUNG**
TEMPERATURE MONITORING DEVICE FOR TOOL SPINDLES AND METHOD UTILIZING A TEMPERATURE MONITORING DEVICE
DISPOSITIF DE SURVEILLANCE DE TEMPÉRATURE POUR BROCHES D'OUTIL DE MACHINES DE TRAITEMENT DU BOIS AINSI QUE PROCÉDÉ FAISANT APPEL AU DISPOSITIF DE SURVEILLANCE DE LA TEMPÉRATURE

(30) Priorität: 20.05.2017 DE 102017005068
(43) Veröffentlichungstag der Anmeldung: 21.11.2018
(73) Patentinhaber: Michael Weinig AG, 97941 Tauberbischofsheim (DE)
(72) Erfinder: DAWIDZIAK, ALbrecht, 97950 Großrinderfeld (DE); KLEIN, Hubert, 97877 Wertheim-Nassig (DE)
(74) Vertreter: Kohl, Karl-Heinz

(56) Entgegenhaltungen:
- EP-A1- 1 762 331
- EP-A1- 3 205 463
- EP-A1- 3 301 325
- WO-A1-2016/065493
- CN-A- 103 823 409
- DE-A1- 102016 011 402
- US-A1- 2017 219 152

## Beschreibung

Die Erfindung betrifft eine Einrichtung mit einer Temperatur-Überwachungseinrichtung für Werkzeugspindeln von Holzbearbeitungsmaschinen, vorzugsweise Kehlmaschinen, nach dem Oberbegriff des Anspruches 1. Eine solche Einrichtung ist aus dem Dokument CN 103 823 409 A bekannt. Die Erfindung betrifft ebenfalls ein Verfahren zur Überwachung der Temperatur wenigstens eines Drehlagers einer Werkzeugspindel einer Holzbearbeitungsmaschine nach dem Anspruch 11.

Bei Holzbearbeitungsmaschinen, insbesondere Kehlmaschinen, werden Werkzeugspindeln eingesetzt, mit denen zur Bearbeitung erforderliche Werkzeuge drehbar angetrieben werden. Die Werkzeugspindeln haben eine in einem Spindelgehäuse drehbar gelagerte Spindelwelle. Während der Holzbearbeitung sind die Drehlager, welche die Spindelwelle im Spindelgehäuse abstützen, teilweise hohen Kräften ausgesetzt. Dies kann dazu führen, dass die Drehlager beschädigt werden. Wird ein beschädigtes Drehlager nicht erkannt, führt dies zum Ausfall der entsprechenden Werkzeugspindel, was längere Stillstandszeiten der Maschine sowie hohe Reparaturkosten erfordert. Unter Umständen werden durch ein beschädigtes Drehlager auch Umgebungsteile innerhalb der Maschine beeinträchtigt, unter Umständen sogar beschädigt.

Es ist daher bekannt (JP H8-1606 A), die Temperatur der Werkzeugspindel mit einem Temperatursensor zu überwachen. Die Temperatursignale werden einer Auswerteeinheit zugeführt, die ein Warnsignal erzeugt, wenn die gemessene Temperatur einen Grenzwert erreicht bzw. überschreitet. Das Warnsignal wird auf einem Bildschirm angezeigt. Außerdem wird ein Signalton erzeugt. Befindet sich an der Maschine keine Bedienperson, die die Warnmeldung sieht und/oder hört, läuft die Maschine weiter, so dass die Gefahr besteht, dass die Werkzeugspindel sowie weitere Maschinenteile beschädigt werden.

Der Erfindung liegt die Aufgabe zugrunde, die gattungsgemäße Temperatur-Überwachungseinrichtung, die Holzbearbeitungsmaschine und das Verfahren so auszubilden, dass ein drohender Ausfall der Werkzeugspindel in der Holzbearbeitungsmaschine ortsunabhängig erkannt werden kann.

Diese Aufgabe wird bei der gattungsgemäßen Temperatur-Überwachungseinrichtung erfindungsgemäß mit den kennzeichnenden Merkmalen des Anspruches 1, bei der Holzbearbeitungsmaschine mit den Merkmalen des Anspruches 13 und beim Verfahren mit den Merkmalen des Anspruches 15 gelöst.

Bei der Temperatur-Überwachungseinrichtung werden die von der Auswerteeinheit erfassten Temperaturwerte in der Cloud abgelegt. Die Daten können mittels der auf dem Smart Device befindlichen App und/oder auch mittels eines Browsers von Zugriffsberechtigten abgerufen werden. Dadurch besteht die Möglichkeit, diese Daten ortsunabhängig jederzeit abrufen und einsehen zu können. So hat der Kunde und/oder der Hersteller der Holzbearbeitungsmaschine die Möglichkeit, den Zustand der überwachten Werkzeugspindel jederzeit aus der Cloud abzurufen und zu kontrollieren. Dadurch ist gewährleistet, dass bei Erreichen des Temperatur-Grenzwertes rechtzeitig eingegriffen werden kann, um einen Ausfall der Werkzeugspindel zu verhindern, ohne dass sich beispielsweise ein Servicetechniker am Ort der Maschine befinden muss.

Erfindungsgemäß werden in der Cloud auch die Temperatur-Grenzwerte abgelegt.

Vorteilhaft sind die Auswerteeinheit und die Steuerung für die die Werkzeugspindel enthaltende Maschine über ein gemeinsames Netz (Datennetzwerk) miteinander verbunden, so dass ein einfacher Zugriff auf die Auswerteeinheit sowie die Steuerung möglich ist.

Die Steuerung ist erfindungsgemäß so ausgeführt, dass sie Datensätze an die Cloud überträgt.

Erfindungsgemäß überträgt die Steuerung in festgelegten Zeitintervallen oder bei Auftreten einer Überschreitung eines Temperatur-Grenzwertes Datensätze in die Cloud. Die Datensätze enthalten zumindest Angaben über die zum Abfragezeitpunkt gemessene Temperatur an der Spindel.

Die Datensätze können weitere Angaben enthalten, wie die Umgebungstemperatur und Zustandsdaten der Maschine, ob und mit welcher Drehzahl die Spindel läuft, ob der Vorschub läuft, ob Holz in der Maschine ist, welche Werkzeuge montiert sind und dergleichen.

Erfindungsgemäß sind in den abgelegten Datensätzen auch die Temperatur-Grenzwerte der jeweiligen Spindel enthalten. Die Temperatur-Grenzwerte werden vorteilhaft nur bei jedem Einschalten der Holzbearbeitungsmaschine an die Cloud übertragen, bevorzugt zusammen mit Angaben über die Maschinenkonfiguration, d.h. wie viele Spindeln an welchen Positionen vorhanden sind, und zu den Datensätzen ergänzt.

Der in der App bei Abruf abgebildete Datensatz enthält vorteilhaft Angaben über die Zahl der Warnungen und die Zahl der Abschaltungen der Maschine, auf jeweils eine der Spindeln bezogen. Dadurch erhalten der Bediener der Maschine und/oder ein auswärtiger Servicetechniker sofort einen Hinweis darauf, diejenige Werkzeugspindel zu überprüfen, welche die Meldung verursacht hat.

Der aufgrund der Überschreitung einer Grenztemperatur gebildete Datensatz wird in vorteilhafter Weise in einer weiteren Datei gespeichert.

Damit der Anwender sofort eine Meldung erhält, ist es vorteilhaft, wenn die von der Cloud abgesandte Meldung im Push-Betrieb an das Smart Device gesendet wird. Die Meldung kann per E-Mail oder als SMS an das Smart Device weitergegeben werden. Vorteilhaft kann der Benutzer des Smart Device in der App festlegen, in welcher Form er die Meldung erhält. Vorteilhaft ist es, wenn die Daten und/oder Meldungen nur an als Berechtigte hinterlegte Benutzer der App weitergegeben bzw. von diesen Benutzern abgerufen werden können. Dadurch ist sichergestellt, dass nicht jeder mit Hilfe der App auf diese Daten oder Meldungen zugreifen kann.

Die App auf dem Smart Device kann so ausgebildet sein, dass Untermenüs aufgerufen werden können, die Detailinformation enthalten.

Weiter ist es möglich, dass der Benutzer einen Reset auslöst, beispielsweise wenn er die Warnmeldung überprüft hat. Bei diesem Reset werden die Daten im Datensatz bzw. der Datensatz selbst nicht gelöscht. Der Reset bewirkt, dass die angezeigte Anzahl an Warn- und Abschaltmeldungen zurückgesetzt, das heißt auf null gesetzt und bei einem erneuten Aufruf, beispielsweise infolge einer nächsten Warnmeldung, nicht erneut angezeigt wird.

Der Temperatursensor ist im Spindelgehäuse benachbart zum Drehlager angeordnet. Es ist dadurch möglich, den Temperatursensor sehr nahe an das zu überwachende Drehlager heranzuführen. Hierbei kann der Abstand zwischen dem Temperatursensor und dem zu überwachenden Drehlager sehr gering sein, so dass die Temperatur des Drehlagers einwandfrei erfasst werden kann.

Bei einer vorteilhaften Ausführungsform ist das Spindelgehäuse mit wenigstens einer axialen Bohrung versehen, die in eine Stirnseite des Spindelgehäuses mündet und zur Aufnahme des Temperatursensors dient. Der Temperatursensor kann von der Stirnseite des Spindelgehäuses aus sehr einfach so weit in die axiale Bohrung geschoben werden, bis sich ein Sensorkopf bzw. Temperaturfühler des Sensors benachbart zum Drehlager befindet. Der axiale Verlauf der Bohrung im Spindelgehäuse hat den Vorteil, dass Verstellbewegungen der Spindelachse, insbesondere des Spindelgehäuses, in Achsrichtung sowie auch quer dazu nicht beeinträchtigt werden, wenn die Sensorsignale über Leitungen weitergeleitet werden. Innerhalb der Bohrung ist der Sensor geschützt untergebracht und stört beim Verstellen der Werkzeugspindel nicht.

Bei einer anderen vorteilhaften Ausbildung weist das Spindelgehäuse wenigstens eine etwa radial verlaufende Bohrung auf, die in die Außenseite des Spindelgehäuses mündet. Eine solche Bohrung lässt sich sehr einfach am Spindelgehäuse anbringen. Wenn der Temperatursensor mit einer Sensorleitung versehen ist, kann diese auf kürzestem Weg nach außen geführt werden.

Eine besonders vorteilhafte Ausbildung ergibt sich, wenn der Temperatursensor direkt am oder im Drehlager angeordnet ist, vorzugsweise am oder im äußeren, feststehenden Lagerring. Dann wird die Temperatur des Drehlagers mit hoher Genauigkeit erfasst.

Hat die Werkzeugspindel mehrere Drehlager, beispielsweise zwei Drehlager, dann ist in vorteilhafter Weise für jedes Drehlager jeweils wenigstens ein Temperatursensor vorgesehen. Ist aber beispielsweise bekannt, dass nur das eine von mehreren Drehlagern Temperaturprobleme hat, dann reicht es aus, nur dieses eine Drehlager mittels wenigstens eines Temperatursensors zu überwachen.

Die Signale des Temperatursensors können entweder über wenigstens eine Sensorleitung oder aber drahtlos übertragen werden. Die drahtlose Übertragung der Sensorsignale hat den Vorteil, dass die Verlegung von Sensorleitungen in der Werkzeugspindel und ggf. die Weiterleitung an die Auswerteeinheit innerhalb der Holzbearbeitungsmaschine entfallen.

Die Signale des Temperatursensors können auch an eine Steuerung einer Kehlmaschine übertragen werden.

Bei der erfindungsgemäßen Holzbearbeitungsmaschine ist wenigstens eine der Werkzeugspindeln in der erfindungsgemäßen Weise ausgebildet. Vorteilhaft werden alle Werkzeugspindeln der Holzbearbeitungsmaschine mit wenigstens dem einen Temperatursensor ausgerüstet, mit dem die Temperatur des Drehlagers dieser Werkzeugspindeln erfasst werden kann. Der Benutzer der Holzbearbeitungsmaschine kann somit zuverlässig die Daten aller Werkzeugspindeln der Holzbearbeitungsmaschine abrufen, so dass er frühzeitig darauf hingewiesen wird, wenn eine oder mehrere der Werkzeugspindeln auszufallen drohen.

Da die Temperatur des Drehlagers durch die Umgebungstemperatur der Werkzeugspindel beeinflusst werden kann, hat die erfindungsgemäße Holzbearbeitungsmaschine vorteilhaft wenigstens einen weiteren Sensor, der die Innentemperatur der Holzbearbeitungsmaschine, d. h. die Umgebungstemperatur der Werkzeugspindel in der Holzbearbeitungsmaschine, erfasst.

Bei einer bevorzugten Ausführungsform werden die Signale dieses weiteren Temperatursensors zur Kompensation des Temperatur-Grenzwertes des Drehlagers herangezogen. Steigt beispielsweise die Umgebungstemperatur in der Holzbearbeitungsmaschine an, erwärmt sich auch das Drehlager, ohne dass dies auf eine übermäßige Beanspruchung des Drehlagers zurückzuführen ist. Dementsprechend wird der Temperatur-Grenzwert unter Berücksichtigung der gemessenen Umgebungstemperatur entsprechend angehoben, wodurch der Einfluss der Umgebungstemperatur auf die Temperatur des Drehlagers kompensiert wird. Die Kompensation kann auch direkt an den Temperatursignalen der einzelnen Sensoren vorgenommen werden.

Beim erfindungsgemäßen Verfahren wird die Temperatur des Drehlagers mit dem wenigstens einen Temperatursensor ständig erfasst und der Auswerteeinheit zugeführt. Die von der Auswerteeinheit erfassten Daten werden in der Cloud abgelegt. Die Daten können in aufbereiteter Form mittels einer auf einem Smart Device befindlichen App und/oder mittels eines Browsers abgerufen werden

Das von der Auswerteeinheit erzeugte Signal kann ein Warnsignal auslösen, das den Benutzer darauf hinweist, dass die erfasste Werkzeugspindel einen kritischen Bereich erreicht hat. Das Warnsignal kann ein akustisches und/oder optisches Signal oder beispielsweise eine Warnmeldung auf einem Bildschirm und dgl. sein.

Die Auswerteeinheit kann Teil der Maschinensteuerung sein. Vorteilhaft ist die Auswerteeinheit eine von der Maschinensteuerung getrennte Einheit. In diesem Fall ruft die Maschinensteuerung die Daten bzw. Werte von der Auswerteinheit ab. Bei einer durch die Auswerteeinheit festgestellten Temperatur-Überschreitung wird die Maschinensteuerung veranlasst, eine Warnmeldung zu erzeugen.

Das von der Auswerteeinheit erzeugte Signal kann auch ein Abschaltsignal auslösen, über welches Maschinenfunktionen, wie Spindel, Vorschub, abgeschaltet werden. Dadurch werden zuverlässig eine Überbeanspruchung und damit eine Beschädigung der Werkzeugspindel vermieden. Vorteilhaft werden auf Basis der ausgewerteten Temperatursignale alle Spindeln und der Vorschub der Holzbearbeitungsmaschine automatisch abgeschaltet.

Vorteilhaft ist es, wenn zwei unterschiedlich hohe Temperaturgrenzwerte durch die Auswerteeinheit überwacht werden. Wird erstmals der tiefere Temperatur-Grenzwert erreicht, dann kann die Auswerteeinheit vorteilhaft ein Warnsignal auslösen. Bei Erreichen des höheren Temperaturgrenzwertes wird ein weiteres Signal erzeugt, das in diesem Falle vorteilhaft ein Abschaltsignal auslöst, mit dem die überwachte Werkzeugspindel bzw. weitere Maschinenfunktionen abgeschaltet werden.

Vorteilhaft wird bei Durchführung des Verfahrens nicht nur die Temperatur des Drehlagers, sondern auch die Umgebungstemperatur der überwachten Werkzeugspindel durch wenigstens einen weiteren Temperatursensor erfasst. Diese Umgebungstemperatur wird dann zur Kompensation des Temperaturgrenzwertes des Drehlagers und/oder des Temperaturwertes herangezogen.

Bei einer bevorzugten Ausführungsform wird bei Erreichen des Temperaturgrenzwertes ein Signal an eine Smart Device gesendet. Dann können entsprechende Maßnahmen ergriffen werden, um beispielsweise die Ursachen des Temperaturanstieges des Drehlagers zu überprüfen oder die vorbeugende Instandhaltung einzuplanen und in die Wege zu leiten.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in schematischer Darstellung eine erfindungsgemäße Kehlmaschine mit Spindeln,
- Fig. 2: in perspektivischer Darstellung eine Spindel,
- Fig. 3 und 4: jeweils Axialschnitte durch die Spindel gemäß Fig. 2,
- Fig. 5: in einem Radialschnitt den Befestigungsbereich zweier Temperatursensoren an der Spindel,
- Fig. 6: einen Blockplan einer erfindungsgemäßen Temperatur-Überwachungseinrichtung.

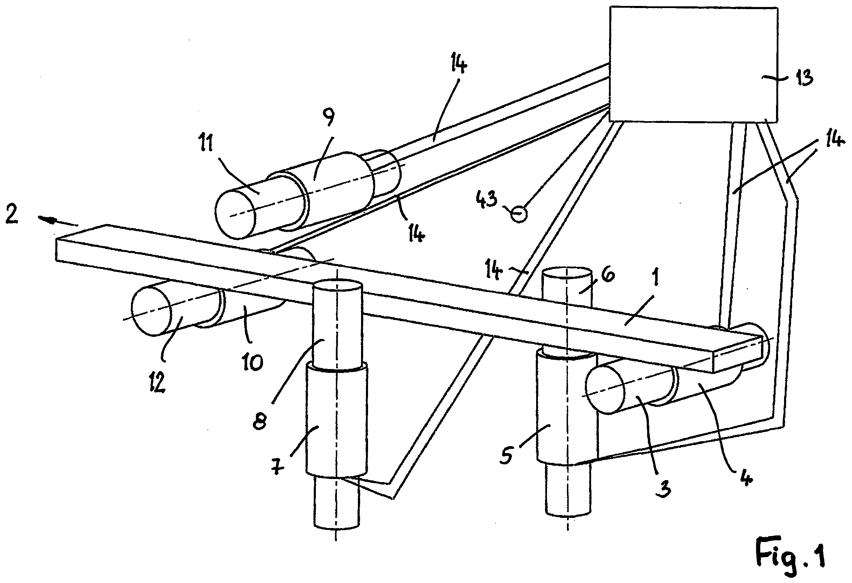

Fig. 1 zeigt in schematischer Darstellung eine Kehlmaschine, mit welcher im Querschnitt rechteckige Werkstücke 1 aus Holz, Kunststoff und dergleichen an allen vier Seiten im Durchlaufverfahren bearbeitet werden können. In Fig. 1 sind nur die Spindeln und die darauf sitzenden, schematisch dargestellten Werkzeuge angegeben, mit denen die Werkstückbearbeitung erfolgt. Die Transportelemente, Auflagen für die Werkstücke und dergleichen sind der Übersichtlichkeit wegen nicht dargestellt. Die Werkstücke 1 werden in Pfeilrichtung 2 durch die Kehlmaschine transportiert. Zunächst wird die Unterseite der Werkstücke 1 mit einem Werkzeug 3 bearbeitet, das auf einer horizontalen Spindel 4 sitzt. Mit dem Werkzeug 3 wird das Werkstück 1 beispielsweise gerade gehobelt. In Transportrichtung 2 hinter der unteren horizontalen Spindel 4 befindet sich eine vertikale rechte Spindel 5, die ein Werkzeug 6 trägt, mit dem die in Durchlaufrichtung 2 rechte Längsseite des Werkstückes 1 beim Durchlauf des Werkstückes bearbeitet wird. In Transportrichtung 2 hinter der rechten vertikalen Spindel befindet sich eine linke vertikale Spindel 7, auf der ein Werkzeug 8 sitzt, mit welchem die in Transportrichtung 2 linke Längsseite des Werkstückes 1 bearbeitet wird. In Durchlaufrichtung 2 hinter der linken vertikalen Spindel sind eine obere sowie eine untere horizontale Spindel 9, 10 vorgesehen, deren Werkzeuge 11, 12 die Ober- und die Unterseite des Werkstückes 1 bearbeiten. Die Werkzeuge können jeweils Hobel- oder Profilierwerkzeuge sein, mit denen die jeweiligen Seiten entweder gerade gehobelt oder mit einem Profil versehen werden.

Bei allen Spindeln 4, 5, 7, 9, 10 werden die Lager durch Temperatursensoren überwacht, deren Signale einer Steuerung 13 zugeführt werden. Diese Signale können über Leitungen 14, aber auch drahtlos der Steuerung 13 der Kehlmaschine übermittelt werden.

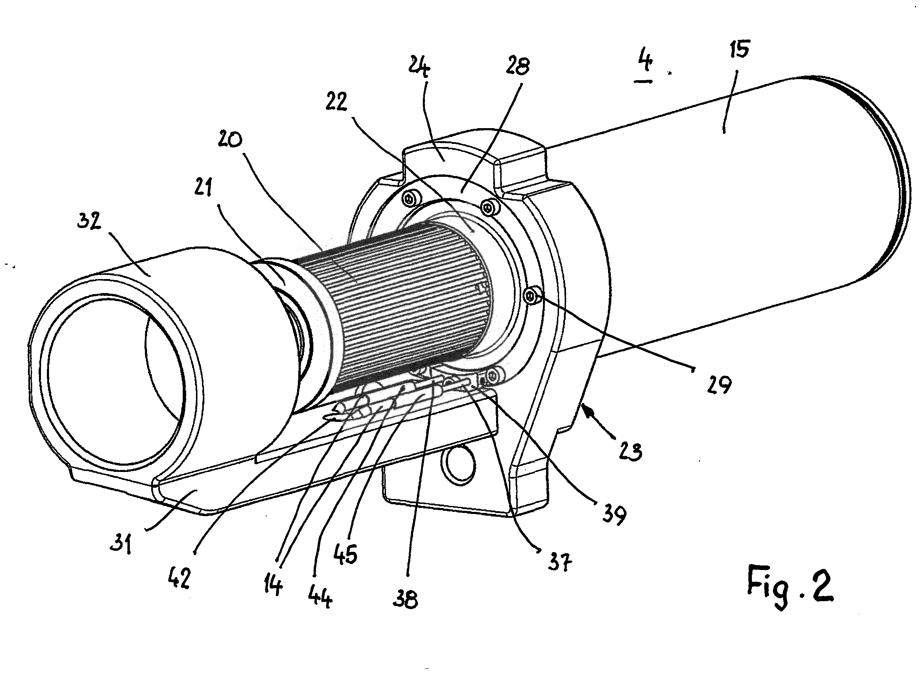

Anhand der Fig. 2 bis 5 wird die Spindel 4 näher beschrieben. Die anderen Spindeln 5, 7, 9, 10 der Kehlmaschine haben eine grundsätzlich gleiche Ausbildung.

Die Spindel 4 hat ein Spindelgehäuse 15, in dem eine Spindelwelle 16 drehbar gelagert ist. Das Spindelgehäuse 15 ist beispielhaft eine zylindrische Spindelhülse, welche die Spindelwelle 16 mit Abstand umgibt. An beiden Enden des Spindelgehäuses 15 befinden sich Drehlager 17, 18 zur Abstützung der Spindelwelle 16. Die Drehlager 17, 18 sind vorteilhaft Wälzlager, im Ausführungsbeispiel Kugellager. Vorteilhaft sind jeweils zwei Kugellager aneinanderschließend an beiden Enden des Spindelgehäuses 15 vorgesehen. Die Drehlager 17, 18 sind in geeigneter Weise im Spindelgehäuse 15 axial gesichert. Die Spindel 4 ist mit dem Spindelgehäuse 15 in einer Bohrung eines nicht dargestellten Spindelschiebers aufgenommen und kann in dieser Bohrung in bekannter Weise axial verstellt werden. Dies kann als Pinolenverstellung bezeichnet werden.

Die Spindelwelle 16 ist an ihrem einen Ende mit einer Aufnahme 19 versehen, die im Ausführungsbeispiel eine HSK-Aufnahme ist, die ein Werkzeug aufnimmt. Auf dem über das Spindelgehäuse 15 axial vorstehenden Ende sitzt eine Antriebsscheibe 20, die im Ausführungsbeispiel eine Zahnriemenscheibe ist, über die ein Endlosriemen eines Antriebes geführt ist, mit welchem die Spindelwelle 16 drehbar angetrieben wird. Die Antriebsscheibe 20 sitzt drehfest auf der Spindelwelle 16 und ist axial zwischen zwei auf der Spindelwelle 16 befestigten Ringen 21, 22 gesichert. Der Ring 21 ist als Mutter ausgebildet und dient zusammen mit der Antriebsscheibe 20 und dem Ring 22 auch zur Axialsicherung des Drehlagers 17.

An der Spindel 4 ist ein Halter 23 befestigt. Er hat einen Aufnahmering 24, der an einer Stirnseite mit einer Vertiefung 25 versehen ist, in die das Spindelgehäuse 15 mit einem Ende ragt. Die Vertiefung 25 wird axial von einem radial nach innen gerichteten Ringflansch 26 begrenzt, an dem das Spindelgehäuse 15 mit seinem stirnseitigen Rand anliegt.

Der Aufnahmering 25 weist an seiner anderen Stirnseite eine weitere Vertiefung 27 auf, die wesentlich flacher ist als die Vertiefung 25 und sich aufgrund einer spanenden Bearbeitung des gegossenen Halters 23 ergibt. Der auf diese Weise bearbeitete Boden 28 (Fig. 2) ist von Befestigungsschrauben 29 durchsetzt, die über den Umfang der Vertiefung 27 verteilt angeordnet und in Gewindebohrungen an der Stirnseite des Spindelgehäuses 15 geschraubt sind.

Der Ringflansch 26 sowie der benachbarte Bereich des Spindelgehäuses 15 haben in etwa den gleichen Innendurchmesser. Der Ring 22 hat einen radial nach außen gerichteten Ringflansch 30, der zur Innenseite des Ringflansches 26 sowie zur Innenseite des Spindelgehäuses 15 nur geringen Abstand hat und damit einen Dichtspalt bildet. Dadurch wird das Eindringen von Spänen oder Staub an die Drehlager 17 verhindert.

Vom Aufnahmering 24 steht ein Tragarm 31 ab, der am freien Ende mit einem Haltering 32 versehen ist, in welchem eine (nicht dargestellte) Löseeinheit für die in der Spindel 4 eingespannten Werkzeuge 3 gehalten wird. Diese sind in der HSK-Aufnahme der Spindel 4 durch bekannte, nicht dargestellte Spannmittel gespannt. Der Halter 23 dient nicht nur zum Halten der Löseeinheit, sondern auch als Träger einer Mutter oder eines Gewindes für die Axialverstellung der Spindel.

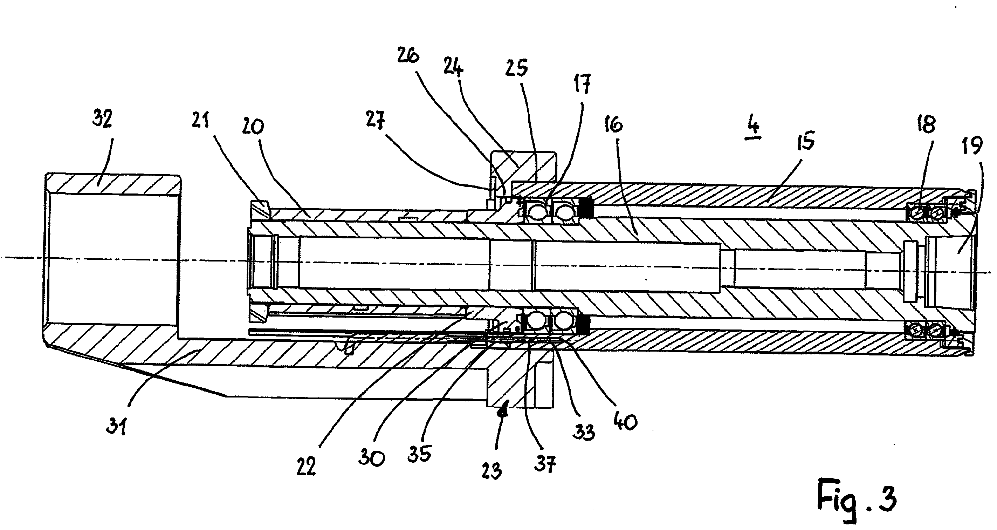

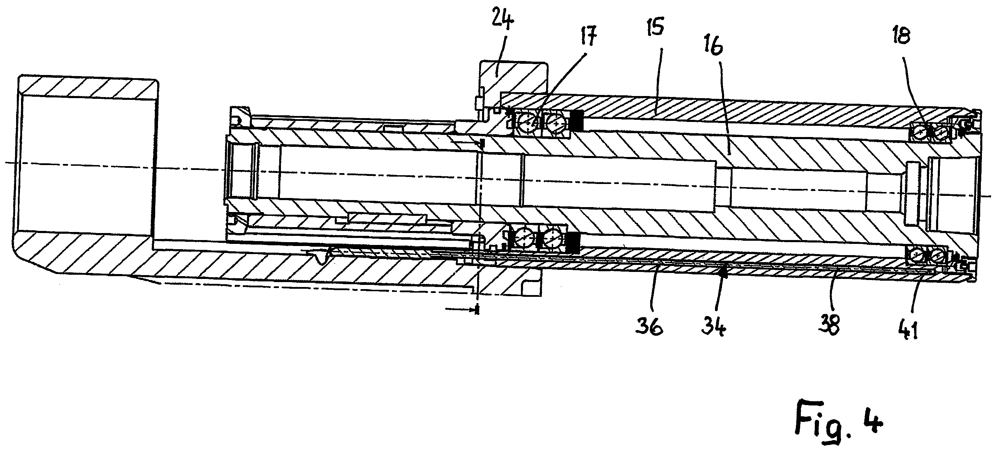

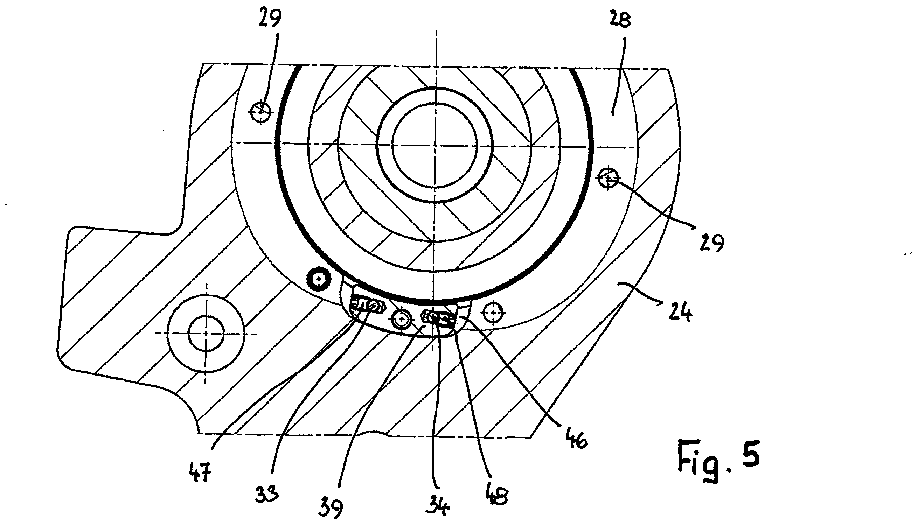

Die Spindel 4 ist mit Temperatursensoren 33, 34 versehen, mit denen die Temperatur der Drehlager 17, 18 erfasst werden kann. Im Ausführungsbeispiel sind die Temperatursensoren 33, 34 durch axiale Bohrungen 35, 36 (Fig. 3 und 4) im Spindelgehäuse 15 bis zu den jeweiligen Lagern 17, 18 geführt. Die Sensoren haben einen Sensorkopf 40, 41, dem eigentlichen Temperaturfühler, der in dem vorderen Ende eines dünnen Rohres 37, 38 eingebracht ist, in welchem Sensorleitungen (Sensordrähte) 14 nach außen geführt sind. An das Rohr 37, 38 schließt eine Hülse 44, 45 an (Fig. 2), in vorteilhafter Weise eine Quetschhülse, aus deren vom Rohr 37, 38 abgewandten Ende die ummantelten flexiblen Sensorleitungen 14 austreten. Die axialen Bohrungen 35, 36 erstrecken sich von der im Aufnahmering 24 liegenden Stirnseite des Spindelgehäuses 15 aus. Die Temperatursensoren 33, 34 ragen mit ihrem Rohr 37, 38 durch einen Befestigungsblock 39 aus dem Spindelgehäuse 15. Der Befestigungsblock 39 ist am Spindelgehäuse 15 lösbar befestigt. Der Ringflansch 26 des Aufnahmeringes 24 ist im Bereich des Befestigungsblockes 39 durch eine Aussparung 46 unterbrochen (Fig. 5). Die Ränder der Aussparung 46 haben jeweils Abstand vom Befestigungsblock 39. Im Befestigungsblock 39 werden die Rohre 37, 38 und damit die Temperatursensoren 33, 34 gesichert, so dass sie in den Bohrungen 35, 36 nicht verschoben werden können. Dadurch wird sichergestellt, dass der Sensorkopf 40, 41 sich stets in Höhe der zu überwachenden Drehlager 17, 18 befindet. Die Sicherung kann wie im Ausführungsbeispiel über seitlich in den Befestigungsblock 39 geschraubte Gewindestifte 47, 48 erfolgen. Dadurch lassen sich Längentoleranzen oder auch unterschiedlich tiefe Bohrungen 35, 36 ausgleichen. Es ist auch möglich, die Sensoren 33, 34 mit einem Gewinde zu versehen und in den Befestigungsblock 39 einzuschrauben.

Die Sensorleitungen 14 werden in geeigneter Weise zur Maschinensteuerung 13 geführt, wie es beispielhaft anhand der Fig. 1 mit den Leitungen 14 beschrieben und erläutert worden ist. Im dargestellten Ausführungsbeispiel werden die Sensorleitungen14 durch Öffnungen 42 im Tragarm 31 weitergeführt.

Die Temperatursensoren 33, 34 können auch abweichend vom dargestellten Ausführungsbeispiel radial an die zu überwachenden Drehlager 17, 18 herangeführt werden. In diesem Falle sind nur sehr kurze Bohrungen für die Temperatursensoren 33, 34 erforderlich.

Mit den Temperatursensoren 33, 34 kann die Temperatur der Drehlager 17, 18 permanent überwacht werden. Die Signale der Temperatursensoren 33, 34 werden einer Auswerteeinheit zugeführt. Im einfachsten Fall wird bei Überschreiten eines vorgegebenen Temperatur-Grenzwertes von der Auswerteeinheit ein Signal erzeugt. Es kann dazu verwendet werden, um eine Warnmeldung an den Benutzer der Spindel bzw. der Kehlmaschine zu senden. Auch ist es möglich, dieses Signal dazu heranzuziehen, die entsprechende Maschinenfunktion, beispielsweise den Drehantrieb der Spindel 4 oder den Vorschub, d.h. den Werkstücktransport durch die Kehlmaschine, abzuschalten. Dieser Grenzwert für die Temperatur der Drehlager 17, 18 kann so niedrig eingestellt sein, dass das entsprechend ausgewertete Signal der Temperatursensoren 33, 34 frühzeitig ausgesendet wird, wenn die Drehlager 17, 18 noch nicht beschädigt sind. Die Temperatursensoren 33, 34 dienen in diesem Falle der vorbeugenden Instandhaltung sowie der frühzeitigen Erkennung von Lagerschäden. Dadurch wird zuverlässig vermieden, dass aufgrund nicht rechtzeitig erkannter Lagerschäden Folgeschäden an der Spindel bzw. an der Kehlmaschine auftreten.

Vorteilhaft ist es, wenn nicht nur ein Grenzwert, sondern beispielsweise auch zwei oder mehr Grenzwerte vorgegeben werden. So kann bei Überschreiten der ersten Grenztemperatur eine erste Warnung erzeugt werden, die den Benutzer darauf hinweist, dass bei weiterem Betrieb der Spindel eventuell größere Lagerschäden auftreten können. Bei Erreichen einer zweiten höheren Grenztemperatur kann die Steuerung 13 so eingerichtet sein, dass sie dann die Spindeln 4, 5, 7, 9, 10 sowie den Vorschub abschaltet, um Folgeschäden zu verhindern.

Durch Einsatz der Temperatursensoren 33, 34 ist somit eine vorausschauende Wartung und dadurch eine Reduzierung ungeplanter Stillstandszeiten möglich, die dann auftreten würden, wenn eine Temperaturüberwachung der Drehlager nicht vorgenommen wird. Da Schäden an den Drehlagern 17, 18 durch Einsatz der Temperatursensoren 33, 34 frühzeitig erkannt werden, können Folgeschäden an der Spindel 4 sowie auch an Umgebungsteilen innerhalb der Maschine vermieden werden. Auch werden dadurch Reparaturkosten reduziert.

Im dargestellten und beschriebenen Ausführungsbeispiel werden die Sensorsignale über die Sensorleitungen 14 an die Maschinensteuerung 13 übertragen. Es können aber auch Temperatursensoren eingesetzt werden, die ihre Signale kabellos übertragen. In diesem Falle können die Sensoren insbesondere direkt an bzw. in die Drehlager 17, 18 eingebaut werden, so dass die Temperatur der Drehlager 17, 18 noch wesentlich genauer erfasst werden kann. Die Temperatursensoren 33, 34 können ihre Signale beispielsweise über Funk übertragen, beispielsweise an Empfangseinheiten, die im Bereich der einzelnen Spindeln angeordnet sind. Die Empfangseinheiten für die drahtlose Übermittlung der Sensorsignale sind wiederum über Leitungen 14 mit der Steuerung 13 verbunden. Solche Sensoren erleichtern den Einbau in die Spindel 4, weil keine Vorkehrungen für die Durchführung von Sensorleitungen mehr erforderlich sind.

Auch wenn die Temperatursensoren 33, 34 ihre Signale über die Sensorleitungen 14 übertragen, können die Sensoren direkt im Drehlager 17, 18 angeordnet werden.

Die Zuverlässigkeit der Lagerdiagnose bzw. des Erkennens eines Lagerschadens kann in vorteilhafter Weise dadurch verbessert werden, dass auch die Umgebungstemperatur der Spindel 4 gemessen wird. Hierfür ist, wie in Fig. 1 schematisch angegeben ist, wenigstens ein weiterer Temperatursensor 43 vorgesehen, der an die Maschinensteuerung bzw. Auswerteeinheit 13 angeschlossen ist. Auch dieser Sensor 43 kann seine Signale über Sensorleitungen oder drahtlos, beispielsweise über Funk, übertragen. Mit der Erfassung der Umgebungstemperatur der Spindel 4 kann der Einfluss der Umgebungstemperatur auf die Temperatur der Drehlager 17, 18 in der Auswertung berücksichtigt und kompensiert werden.

Da die durch den wenigstens einen weiteren Temperatursensor 33 erfasste Innenraumtemperatur der Maschine Einfluss auf die Temperatur der Drehlager 17, 18 hat, kann die Steuerung 13 so ausgeführt sein, dass die Grenzwerte der Lagertemperaturen bzw. die erfassten Lagertemperaturwerte selbst automatisch an die gemessene Innenraumtemperatur angepasst werden. Steigt beispielsweise die vom Temperatursensor 43 erfasste Innenraumtemperatur der Maschine an, steigt auch die Temperatur der Drehlager 17, 18. Dieser Temperaturanstieg hat dann allerdings nichts mit einer entsprechenden Belastung der Drehlager zu tun. Dementsprechend ist die Steuerung bzw. die Auswertung der Temperatursensoren so vorgesehen, dass die entsprechenden Grenzwerte so erhöht werden, dass der Einfluss der Innentemperatur der Maschine auf die Temperatur der Drehlager 17, 18 kompensiert wird.

Des Weiteren kann die Steuerung 13 bzw. Auswerteeinheit so ausgebildet sein, dass sie nicht die Temperatur-Grenzwerte der Drehlager 17, 18, sondern die Spindeltemperaturwerte in Abhängigkeit von der Innentemperatur der Maschine automatisch kompensiert bzw. anpasst, indem beispielsweise ein innentemperaturabhängiger Korrekturwert von dem gemessenen Temperaturwert abgezogen bzw. zu diesem addiert wird. Auch eine Kombination beider Verfahren ist möglich.

Die automatische Anpassung und Kompensation hat den Vorteil, dass der Benutzer der Maschine nicht selbst die Anpassung vornehmen muss.

Es ist aber durchaus möglich, die Steuerung 13 so zu gestalten, dass die Grenzwerte für die Lagertemperaturen manuell in Abhängigkeit von der gemessenen Innenraumtemperatur der Maschine angepasst werden.

Die Temperaturüberwachung der Drehlager 17, 18 kann so ausgebildet sein, dass die Temperaturwerte kontinuierlich gespeichert werden. Dadurch ist es möglich, die Historie des Temperaturverlaufes der einzelnen Temperatursensoren 33, 34 festzuhalten und beispielsweise die Häufigkeit der Überschreitung der Grenzwerte über einen bestimmten Zeitraum zu überprüfen. Diese gespeicherten Daten können beispielsweise in der Auswerteeinheit, der Maschinensteuerung oder durch Übertragung in eine Cloud abgelegt werden, so dass zugangsberechtigte Personen jederzeit die gespeicherten Messwerte abrufen und auswerten können. Dies ist insbesondere für den Service von Vorteil. Insbesondere die Speicherung in einer Cloud bietet die Möglichkeit der vorteilhaften Nutzung sogenannter Smart devices und Apps zur Analyse und Anzeige bestimmter Daten von maschinenunabhängigen Orten aus.

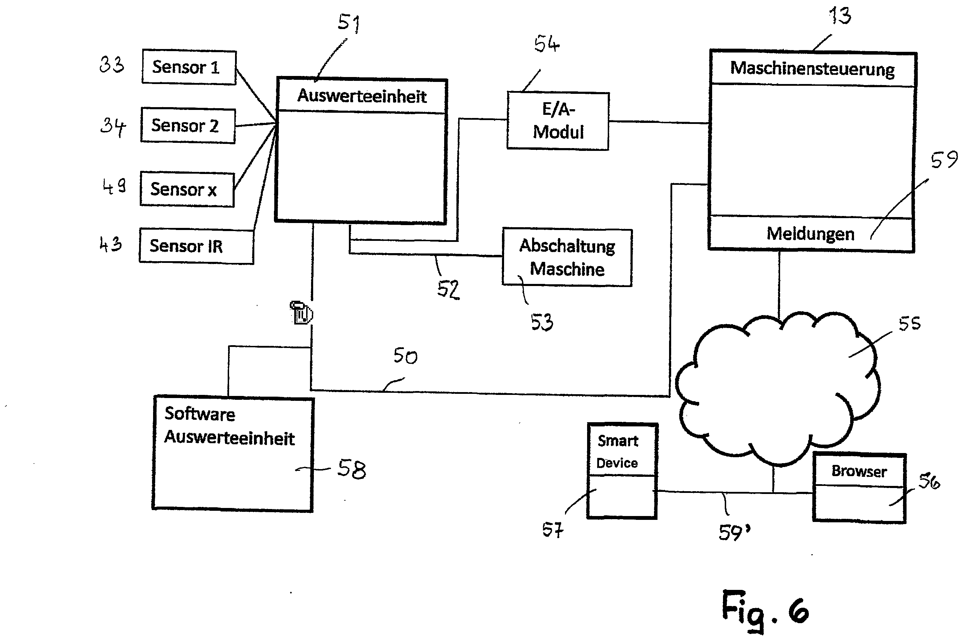

Fig. 6 zeigt in schematischer Darstellung ein beispielhaftes System der Temperaturüberwachung der Spindel. Dieses Temperaturüberwachungssystem hat die Auswerteeinheit 51, der die Signale der Temperatursensoren 33, 34, 43 zugeführt werden. An die Auswerteeinheit 51 können mehr Sensoren als in Fig.6 dargestellt angeschlossen werden. In Fig. 6 ist hier beispielhaft der weitere Sensor 49 angegeben. Die Auswerteeinheit 51 wandelt die Sensorsignale in Temperaturwerte. Die Sensoren 33, 34, 43, 49 können die Signale drahtlos oder drahtgebunden an die Auswerteeinheit 51 übergeben.

Über eine Leitung 50 beispielsweise eines Netzes oder Datennetzwerkes ist die Auswerteeinheit 51 mit der Maschinensteuerung 13 verbunden, welche darüber die Temperaturwerte der Sensoren 33, 34, 43, 49 jederzeit abrufen kann.

Die Leitung 50 kann auch so zu verstehen sein, dass sie eine Funkstrecke darstellt, über welche die Temperaturwerte drahtlos der Maschinensteuerung 13 zugeführt werden. Auch für die weiter noch zu beschreibenden Leitungen gilt, dass mit ihnen sowohl eine drahtgebundene als auch eine drahtlose Übertragung vorgenommen werden kann.

Die Auswerteeinheit 51 kann über eine Leitung 52 in der beschriebenen Weise ein Abschaltsignal senden, falls ein von den Sensoren gemessener Temperaturwert den kritischen Temperaturwert der jeweiligen Spindel überschreitet. In diesem Falle wird die Holzbearbeitungsmaschine 53 abgeschaltet, so dass eine Beschädigung der jeweiligen Spindel bzw. auch der gesamten Maschine zuverlässig vermieden wird.

Die Maschinensteuerung 13 ist erfindungsgemäß so ausgebildet, dass in bestimmten Zeitabständen, beispielsweise alle 5 min., die Temperaturwerte an eine Cloud 55 übergeben werden. Vorteilhaft werden gleichzeitig auch die Zustandsdaten der Maschine übergeben. Die übertragenen Werte werden als Datensatz in einer Datenbank in der Cloud 55 abgelegt. Dazu werden die aktuellen Temperaturwerte der einzelnen Temperatursensoren 33, 34, 43, 49 über die Leitung 50 aus der Auswerteeinheit 51 abgerufen.

Vorteilhaft werden diese Daten auch in eine Textdatei der Maschinensteuerung 13 geschrieben. Eine solche Textdatei wird beispielsweise täglich erstellt und in der Maschinensteuerung gespeichert. Bei dieser täglich erstellten Textdatei werden auch die Zustandsdaten der Maschine 53 berücksichtigt.

Die in der Cloud 55 gespeicherten Daten und Werte können mit Hilfe eines Browsers 56 oder einem Smart Device 57 mittels einer darauf installierten App von berechtigten Personen jederzeit abgefragt werden.

Unter Cloud 55 wird ein externer dezentraler Server (Netzwerkserver, Cloud-Server) verstanden, auf den von unterschiedlichen Orten zugegriffen werden kann und auf dem eine Anwendungssoftware implementiert ist, als sogenannter Dienst bezeichnet, welche die übertragenen Daten handhabt und verwaltet. Die übertragenen Daten können nicht nur die Daten der Temperaturüberwachung sein, sondern auch andere Maschinendaten und Daten unterschiedlicher Maschinen. Beispielsweise werden die Daten in einer Datenbank gespeichert und zum Abruf mittels des Browsers 56 oder der Smart Device 57 je nach festgelegten Berechtigungen in einer entsprechenden Form aufbereitet und dargestellt. Vorteilhaft stellt die Anwendungssoftware der Cloud auch Möglichkeiten zur Verfügung, die Daten auszuwerten.

Dadurch besteht die Möglichkeit, dass ein Servicetechniker des Herstellers der Maschine die abgespeicherten Werte/Daten überprüfen und dem Betreiber der Maschine Hinweise geben kann, wie er das Überschreiten der Temperaturen an der Maschine vermeiden kann. Der Servicetechniker kann auch anhand der gespeicherten Daten überprüfen, ob ein Austausch von Maschinenteilen notwendig ist, um zukünftige Temperaturüberschreitungen zu vermeiden.

In der Cloud 55 lassen sich auch Daten der Steuerungssoftware für die Maschinensteuerung 13 ablegen. Dann ist es über den Browser 56 oder das Smart Device 57 möglich, für ein Update der Software Daten in die Cloud 55 hochzuladen, so dass der Betreiber der Maschine das Update der Steuerungssoftware durchführen kann.

Weiter besteht die Möglichkeit, in der Cloud 55 kundenspezifische Daten, maschinenspezifische Daten und dergleichen zu speichern, die vom Betreiber der Maschine 53 und/oder vom Servicetechniker abgerufen werden können.

Zur Parametrisierung der Auswerteeinheit 51 ist eine Software 58 vorgesehen. Die Software 58 wird in der Regel nur bei der Einstellung der Auswerteeinheit 51 eingesetzt oder zur Änderung von Eingaben in die Auswerteeinheit herangezogen. Auch kann die Software 58 außer zur Programmierung der Auswerteeinheit 51 zur Speicherung der erfassten Temperaturwerte verwendet werden.

Die Steuerung 13 kann an einen (nicht dargestellten) Monitor bzw. Bildschirm angeschlossen sein, auf dem beispielsweise Warnmeldungen 59 angezeigt werden können. So kann eine Warnmeldung 59 dann angezeigt werden, wenn bei Verwendung von beispielsweise zwei Temperatur-Grenzwerten der erste Grenzwert der Temperatur erreicht ist. Bei Erreichen des zweiten Grenzwertes durch einen der Temperatursensoren 33, 34, 43, 49 kann eine entsprechende Hinweismeldung angezeigt werden, dass die Spindeln und der Vorschub wegen des Überschreitens dieses Grenzwertes abgeschaltet wurden.

Initiiert werden diese Warn- bzw. Hinweismeldungen über entsprechende Ausgangssignale der Auswerteeinheit 51, deren Anschluss an die Maschinensteuerung 13 vorteilhaft über ein E/A-Modul 54 vorgenommen ist.

Bei Eintritt einer Warnmeldung 59 wird ein aktueller Datensatz erzeugt und an die Cloud 55 übertragen, woraus diese wiederum die Grenzwertüberschreitung erkennt. Dabei kann die Software so ausgebildet sein, dass wiederum eine Warnmeldung 59' direkt auf dem Smart Device 57 angezeigt wird. Hierbei ist es möglich, diese Warnmeldung 59' nur gezielt bestimmten Zugangsberechtigten zu übersenden. Dies kann beispielsweise über E-Mail oder eine SMS erfolgen. Damit die Warnmeldung 59' von der Cloud 55 sofort dem Smart Device 57 zugeleitet wird, ist es von Vorteil, wenn die Warnmeldung 59' als Push-Nachricht übersandt wird. Der Benutzer des Smart Devices 57 kann unter Nutzung der App selbst festlegen, ob und in welcher Form er eine Warnmeldung 59' erhalten möchte.

Neben der über das Zeitintervall festgelegten Übertragung der Daten an die Cloud und die Textdatei erfolgt also die Übertragung eines Datensatzes immer sofort dann, wenn ein Grenzwert der Temperaturwerte überschritten wird, also ereignisgesteuert. Den Impuls dafür erhält die Maschinensteuerung 13 wie beschrieben über das Ausgangssignal der Auswerteeinheit 51. Es wird nicht abgewartet, bis die Maschinensteuerung 13 den nächsten Abfragezyklus startet.

Bei einer Ausführungsform werden zu den Datensätzen auch die Temperatur-Grenzwerte der jeweiligen Spindel ergänzt. Die Temperatur-Grenzwerte werden vorteilhaft nur bei jedem Einschalten der Holzbearbeitungsmaschine an die Cloud übertragen und für alle weiteren Datensätze übernommen. Damit kann jeder an die Cloud übertragene Datensatz daraufhin überprüft werden, ob an einem Temperaturwert eine Grenzwertüberschreitung vorliegt. Wenn dies der Fall ist, wird dieser Datensatz in eine weitere sogenannte Log-Datei geschrieben und das Senden der Warnmeldung 59'ausgelöst.

Es ist aber auch möglich, dass der Datensatz, welcher aufgrund einer Temperatur-Grenzwertüberschreitung an die Cloud übertragen wurde, als solcher von der Cloud erkannt wird, z.B. weil dieser eine bestimmte Kennzeichnung enthält. In diesem Fall ist eine Auswertung der Temperaturwerte hinsichtlich deren Grenzwerte nicht notwendig. Der Datensatz wird sofort in die Log-Datei geschrieben und das Senden der Warnmeldung 59' ausgelöst.

Die Warnmeldung 59' wird dem Smart Device 57 unabhängig davon zugeleitet, wo sich der Zugangsberechtigte mit seinem Smart Device 57 befindet. Dadurch ist gewährleistet, dass beispielsweise ein Servicetechniker umgehend auf eine Warnmeldung 59'reagieren kann.

Das Temperaturüberwachungssystem ermöglicht es dem Zugangsberechtigten, mittels der Smart Device 57 oder des Browsers 56 durch Abrufen und Analyse der in der Cloud 55 abgelegten Daten/Werte eine Ferndiagnose zu erstellen. Da in der Cloud 55 die Temperaturverläufe der einzelnen Sensoren 33, 34, 43, 49 über die Zeit zusammen mit den Maschinenzustandsdaten zu den jeweiligen Zeitpunkten abgespeichert sind, kann der Zugangsberechtigte anhand der Daten in der Regel erkennen, welcher Fehler aufgetreten ist bzw. worauf das Überschreiten der Temperaturgrenzwerte zurückzuführen ist, und entsprechende Weisungen geben. Vorteilhaft kann die Diagnose durch die in der Cloud 55 vorhandene Anwendungssoftware erfolgen oder diese unterstützt den Nutzer durch bereits aufbereitete oder ausgewertete Daten dabei.

Diese Service-App ist vorteilhaft so ausgebildet, dass mit ihr alle relevanten Daten der Maschine 53 bzw. ihrer Maschinenteile, insbesondere der Spindeln, angezeigt werden. Es ist dabei auch möglich, die Maschine 53 mit ihrem zu überwachenden Maschinenteil auf dem Bildschirm des Smart Device 57 abzubilden, was dem Servicetechniker die Fehlerdiagnose erleichtert.

Weiter ist es beispielhaft möglich, auf dem Bildschirm des Smart Device 57 beispielsweise das zu erzeugende Werkstückprofil oder beispielsweise das eingesetzte Werkzeug anzuzeigen.

Da alle diese Werte und Daten von der Maschinensteuerung 13 an die Cloud 55 abgegeben werden, stehen diese Daten und Werte den Zugangsberechtigten zur Cloud 55 jederzeit zur Verfügung.

Der Zugriff auf die Cloud 55 ist über den Browser 56 und/oder das Smart Device 57, wie ein Smartphone-Handy, einfach möglich.

Da die Drehlager 17, 18 getrennt überwacht werden, kann ihr Zustand unabhängig voneinander genau überwacht werden.

Bei einer Aufzeichnung der Messdaten in einem Speicher können unterschiedliche Werte zusätzlich protokolliert werden. Es wird ein Zeitstempel festgehalten, der angibt, zu welchem Zeitpunkt die protokollierte Überwachung und Speicherung des gesamten Datensatzes stattgefunden hat. Es können nicht nur die Temperaturwerte der Drehlager 17, 18, sondern auch die Umgebungstemperatur der überwachten Spindeln, also die Innenraumtemperatur in der Maschine festgehalten werden. Darüber hinaus ist es möglich, Zustandsdaten der Maschine abzuspeichern, beispielsweise ob zum Zeitpunkt der Protokollierung die überwachten Spindeln ein- oder ausgeschaltet sind, mit welchen Drehzahlen sie laufen, ob der Vorschub ein- und ausgeschaltet ist, ob zu bearbeitende Werkstücke 1 in der Maschine vorhanden sind, welches Profil an den Werkstücken erzeugt werden soll, welche Werkzeuge eingesetzt sind und dergleichen. Aus der Historie dieser abgespeicherten Werte lässt sich beispielsweise auch erkennen, wann und wie lange die Spindeln bzw. der Vorschub ein- bzw. ausgeschaltet waren. Die Signale der Temperatursensoren 33, 34 werden wie beschrieben einer bzw. mehrerer Auswerteeinheiten 51 zugeführt, die diese hinsichtlich der vorgegebenen Grenzwerte überwacht. Die Auswerteeinheiten 51 können Bestandteil der Maschinensteuerung 13 sein oder als von dieser unabhängige Einheit bzw. Einheiten vorgesehen sein. Im ersteren Fall erkennt die Maschinensteuerung 13 selbst die Überschreitung eines Grenzwertes und überträgt wie beschrieben den aktuellen Datensatz an die Cloud bzw. die Textdatei. In letzterem Fall kann die Auswerteeinheit direkt die beschriebenen Maschinenfunktionen abschalten und der Maschinensteuerung ein Signal zur Anzeige einer Warn- oder Fehlermeldung senden.

Vorteilhaft ist, wenn die jeweiligen aktuellen Temperaturen direkt an dem Bildschirm der Maschinensteuerung aufrufbar und diejenigen Temperaturen, die die eingestellten Grenzwerte überschreiten, gekennzeichnet sind, beispielsweise farbig hinterlegt, farbig geschrieben, blinkend oder Ähnliches. Ebenso vorteilhaft ist es, wenn der Bediener über die Maschinensteuerung eine Meldung bekommt, aufgrund welcher Grenzwertüberschreitung an welchem Lager welcher Spindel die Maschine (Spindeln und Vorschub) abgeschaltet wurde.

## Patentansprüche

1. Einrichtung mit einer Temperatur-Überwachungseinrichtung mit Werkzeugspindeln von Holzbearbeitungsmaschinen und mit einer Smart-Device (57), einem Spindelgehäuse (15), in dem eine Spindelwelle (10) mit wenigstens einem Drehlager (17, 18) gelagert ist, mit wenigstens einem zur Erfassung der Temperatur des Drehlagers (17, 18) vorgesehenen Temperatursensor (33, 34, 43, 49), dessen Signale mindestens einer Auswerteeinheit (51) zugeführt werden, die die Signale in Temperaturwerte umsetzt, die in wenigstens einer Cloud (55) abgelegt werden, von der die Daten mittels einer auf der Smart-Device (57) befindlichen App und/oder mittels eines Browsers (56) abrufbar sind,
**dadurch gekennzeichnet, dass** in der Cloud (55) die Temperatur-Grenzwerte und/oder Zustandsdaten der Holzbearbeitungsmaschine (53) abgelegt sind und dass die Steuerung (13) in festgelegten Zeitintervallen oder bei Auftreten einer Überschreitung eines Temperatur-Grenzwertes Datensätze in die Cloud (55) überträgt.

2. Einrichtung nach Anspruch 1
**dadurch gekennzeichnet, dass** die Auswerteeinheit (51) und eine Steuerung (13) für eine die Werkzeugspindel (4) enthaltende Maschine (53) über ein gemeinsames Netz verbunden sind.

3. Einrichtung nach Anspruch 1 oder 2,
**dadurch gekennzeichnet, dass** die Steuerung (13) zur Übertragung von Datensätzen an die Cloud (55) vorgesehen ist.

4. Einrichtung nach einem der Ansprüche 1 bis 4,
**dadurch gekennzeichnet, dass** die Steuerung (13) bei Auftreten einer Überschreitung eines Temperatur-Grenzwertes Datensätze in die Cloud (55) überträgt.

5. Einrichtung nach einem der Ansprüche 1 bis 4,
**dadurch gekennzeichnet, dass** der Temperatursensor (33, 34) im Spindelgehäuse (15) benachbart zum Drehlager (17, 18) angeordnet ist.

6. Einrichtung nach einem der Ansprüche 1 bis 5,
**dadurch gekennzeichnet, dass** das Spindelgehäuse (15) wenigstens eine axiale Bohrung (35, 36) oder wenigstens eine etwa radial verlaufende Bohrung aufweist, die in eine Stirnseite des Spindelgehäuses (15) oder in die Außenseite des Spindelgehäuses (15) mündet und den Temperatursensor (33, 34) aufnimmt.

7. Einrichtung nach einem der Ansprüche 1 bis 6,
**dadurch gekennzeichnet, dass** der Temperatursensor (33, 34) direkt am oder im Drehlager (17, 18) angeordnet ist.

8. Einrichtung nach einem der Ansprüche 1 bis 7,
**dadurch gekennzeichnet, dass** die Maschine (53) eine Kehlmaschine ist.

9. Holzbearbeitungsmaschine, insbesondere Kehlmaschine, mit Werkzeugspindeln zur Bearbeitung von Werkstücken aus Holz, Kunststoff und dergleichen mit einer Einrichtung nach einem der Ansprüche 1 bis 8.

10. Holzbearbeitungsmaschine nach Anspruch 9,
**dadurch gekennzeichnet, dass** in der Holzbearbeitungsmaschine wenigstens ein weiterer Temperatursensor (43) angeordnet ist, der die Innentemperatur der Holzbearbeitungsmaschine erfasst und dessen Signale vorteilhaft zur Kompensation des Grenzwertes der Drehlagertemperatur und/oder des Temperaturwertes der Spindel (4) herangezogen werden.

11. Verfahren zur Überwachung der Temperatur wenigstens eines Drehlagers einer Werkzeugspindel einer Holzbearbeitungsmaschine, insbesondere nach einem der Ansprüche 1 bis 8 bzw. 9 oder 10, bei dem mit wenigstens einem Temperatursensor (33, 34, 43, 49) die Temperatur des Drehlagers (17, 18) permanent erfasst und wenigstens einer Auswerteeinheit zugeführt wird, die die zugeführten Temperatursignale mit wenigstens einem Temperatur-Grenzwert vergleicht und ein Signal erzeugt, wenn die zugeführten Temperatursignale den Temperatur-Grenzwert erreichen, wobei die von der Auswerteeinheit (13, 51) erfassten Daten in einer Cloud (55) abgelegt werden, in der die Temperatur-Grenzwerte und/oder Zustandsdaten der Holzbearbeitungsmaschine ablegbar sind, wobei die Steuerung (13) in festgelegten Zeitintervallen Datensätze in die Cloud (55) überträgt, und wobei die Daten in aufbereiteter Form mittels einer auf einer Smart Device (57) befindlichen App und/oder mittels eines Browsers (56) abrufbar sind.

12. Verfahren nach Anspruch 11,
**dadurch gekennzeichnet, dass** die Steuerung (13) bei Auftreten einer Überschreitung eines Temperatur-Grenzwertes Datensätze in die Cloud (55) überträgt.

13. Verfahren nach Anspruch 11 oder 12,
**dadurch gekennzeichnet, dass** die Daten in der Cloud (55) zum Abruf aufbereitet werden

14. Verfahren nach einem der Ansprüche 11 oder 13,
**dadurch gekennzeichnet, dass** das von der Auswerteeinheit erzeugte Signal ein Warnsignal oder ein Abschaltsignal auslöst, über welches Maschinenfunktionen, wie Spindeln, Vorschub, abgeschaltet werden.

15. Verfahren nach einem der Ansprüche 11 bis 14,
**dadurch gekennzeichnet, dass** die Umgebungstemperatur der überwachten Werkzeugspindel (4) von wenigstens einem weiteren Temperatursensor (43) erfasst und zur Kompensation des wenigstens einen Temperaturgrenzwertes und/oder des Temperaturwertes der Spindel (4) herangezogen wird, und dass vorteilhaft bei Erreichen des Temperatur-Grenzwertes eine Meldung (59') an das Smart Device (57) gesendet wird.

16. Verfahren nach einem der Ansprüche 11 bis 15,
**dadurch gekennzeichnet, dass** Meldungen (59') von der Cloud (55) im Push-Betrieb an das Smart Device (57) gesendet werden.

17. Verfahren nach Anspruch 16,
**dadurch gekennzeichnet, dass** die Meldungen (59') per E-Mail oder als SMS an das Smart Device (57) weitergeleitet werden.

18. Verfahren nach einem der Ansprüche 11 bis 17,
**dadurch gekennzeichnet, dass** die Daten und/oder Meldungen (59') nur an als Berechtigte hinterlegte Nutzer der App weitergeleitet bzw. von diesen Nutzern abgerufen werden können.

## Claims

1. A device comprising a temperature monitoring device for tool spindles of woodworking machines, and comprising a smart device (57), a spindle housing (15) in which a spindle shaft (10) is supported with at least one rotary bearing (17, 18), comprising at least one temperature sensor (33, 34, 43, 49) provided for detecting the temperature of the rotary bearing (17, 18), whose signals are supplied to at least one evaluation unit (51) which converts the signals to temperature values, which are stored in at least one cloud (55) from where the data can be retrieved by means of an app located on the smart device (57) and/or by means of a browser (56),
**characterized in that** the temperature limit values and/or status data of the woodworking machine (53) are stored in the cloud (55) and that the control unit (13) transmits data sets to the cloud (55) in predetermined time intervals or in the event of a temperature limit value being exceeded.

2. The device according to Claim 1,
**characterized in that** the evaluation unit (51) and a control unit (13) for a machine (53) containing the tool spindle (4) are connected by a common network.

3. The device according to Claim 1 or 2,
**characterized in that** the control unit (13) is provided to transmit data sets to the cloud (55).

4. The device according to one of Claims 1 to 4,
**characterized in that** the control unit (13) transmits data sets to the cloud (55) in the event of a temperature limit value being exceeded.

5. The device according to one of Claims 1 to 4,
**characterized in that** the temperature sensor (33, 34) is arranged adjacent to the rotary bearing (17, 18) in the spindle housing (15).

6. The device according to one of Claims 1 to 5,
**characterized in that** the spindle housing (15) comprises at least one axial bore (35, 36) or at least one approximately radially extending bore which opens into an end face of the spindle housing (15) or into the outer side of the spindle housing (15) and receives the temperature sensor (33, 34).

7. The device according to one of Claims 1 to 6,
**characterized in that** the temperature sensor (33, 34) is arranged directly at or in the rotary bearing (17, 18).

8. The device according to one of Claims 1 to 7,
**characterized in that** the machine (53) is a moulding machine.

9. A woodworking machine, in particular moulding machine, comprising tool spindles for machining workpieces of wood, plastic material and the like, with a device according to one of Claims 1 to 8.

10. The woodworking machine according to Claim 9,
**characterized in that** in the woodworking machine at least one additional temperature sensor (43) is arranged which detects the inner temperature of the woodworking machine and the signals thereof are advantageously used for compensation of the limit value of the rotary bearing temperature and/or of the temperature value of the spindle (4).

11. A method for monitoring the temperature of at least one rotary bearing of a tool spindle of a woodworking machine, in particular according to one of Claims 1 to 8 or 9 or 10, in which the temperature of the rotary bearing (17, 18) is permanently detected by means of at least one temperature sensor (33, 34, 43, 49) and supplied to at least one evaluation unit which compares the supplied temperature signals with at least one temperature limit value and generates a signal when the supplied temperature signals have reached the temperature limit value, wherein the data recorded by the evaluation unit (13, 51) are stored in a cloud (55) in which the temperature limit values and/or status data of the woodworking machine can be stored, wherein the control unit (13) transmits data sets to the cloud (55) in predetermined time intervals and wherein the data are retrievable in processed form by means of an app located on a smart device (57) and/or by means of a browser (56).

12. The method according to Claim 11,
**characterized in that** the control unit (13) transmits datasets to the cloud (55) in the event of a temperature limit value being exceeded.

13. The method according to Claim 11 or 12,
**characterized in that** the data are processed for retrieval in the cloud (55).

14. The method according to one of Claims 11 or 13,
**characterized in that** the signal generated by the evaluation unit (13, 51) triggers a warning signal or a switch-off signal by means of which machine functions such as spindles, feed are switched off.

15. The method according to one of Claims 11 to 14,
**characterized in that** the ambient temperature of the monitored tool spindle (4) is detected by at least one additional temperature sensor (43) and is used for compensation of the at least one temperature limit value and/or of the temperature value of the spindle (4) and that advantageously a message (59') is sent to a smart device (57) when the temperature limit value is reached.

16. The method according to one of Claims 11 to 15,
**characterized in that** messages (59') from the cloud (55) are sent in push mode to the smart device (57).

17. The method according to Claim 16,
**characterized in that** the messages (59') are sent by e-mail or as SMS to the smart device (57).

18. The method according to one of Claims 11 to 17,
**characterized in that** the data and/or messages (59') can be sent only to users of the app designated as authorized persons or retrieved by these users.

## Revendications

1. Équipement, doté d'un dispositif de supervision de la température, doté de broches porte-outils de machines à travailler le bois et doté d'un dispositif intelligent (57), d'un carter de broche (15), dans lequel est logé un arbre de broche (10), doté d'au moins un palier pivotant (17, 18), doté d'au moins un capteur de température (33, 34, 43, 49), prévu pour détecter la température du palier pivotant (17, 18), dont les signaux sont amenés vers au moins une unité d'évaluation (51), qui convertit les signaux en des valeurs de température, qui sont sauvegardées dans au moins un cloud (55), à partir duquel les données peuvent être interrogées au moyen d'une application se trouvant sur le dispositif intelligent (57) et/ou au moyen d'un navigateur (56), **caractérisé en ce que** dans le cloud (55) sont sauvegardées les valeurs limites de température et/ou les données d'état de la machine à travailler le bois (53) et **en ce que** dans des intervalles de temps fixés ou lors d'un dépassement d'une valeur limite de température, le système de commande (13) transfère des jeux de données dans le cloud (55).

2. Équipement selon la revendication 1
**caractérisé en ce que** l'unité d'évaluation (51) et un système de commande (13) pour une machine (53) contenant la broche porte-outils (4) sont connectés par l'intermédiaire d'un réseau commun.

3. Équipement selon la revendication 1 ou 2,
**caractérisé en ce que** le système de commande (13) est prévu pour le transfert de jeux de données au cloud (55).

4. Équipement selon l'une quelconque des revendications 1 à 4,
**caractérisé en ce que** lors d'un dépassement d'une valeur limite de température, le système de commande (13) transfère des jeux de données dans le cluod (55).

5. Équipement selon l'une quelconque des revendications 1 à 4,
**caractérisé en ce que** le capteur de température (33, 34) est placé dans le carter de broche (15), au voisinage du palier pivotant (17, 18).

6. Équipement selon l'une quelconque des revendications 1 à 5,
**caractérisé en ce que** le carter de broche (15) comporte au moins un perçage (35, 36) axial ou au moins un perçage s'écoulant approximativement en direction radiale, qui débouche dans une face frontale du carter de broche (15) ou dans la face extérieure du carter de broche (15) et qui reçoit le capteur de température (33, 34).

7. Équipement selon l'une quelconque des revendications 1 à 6,
**caractérisé en ce que** le capteur de température (33, 34) est placé directement dans ou sur le palier pivotant (17, 18).

8. Équipement selon l'une quelconque des revendications 1 à 7,
**caractérisé en ce que** la machine (53) est une moulurière.

9. Machine à travailler le bois, notamment moulurière, dotée de broches porte-outils destinées à l'usinage de pièces en bois, en matière plastique ou analogue, dotée d'un équipement selon l'une quelconque des revendications 1 à 8.

10. Machine à travailler le bois selon la revendication 9, **caractérisée en ce que** dans la machine à travailler le bois est placé au moins un capteur de température (43) supplémentaire, qui détecte la température interne de la machine à travailler le bois et dont les signaux sont mis à contribution avantageusement pour compenser la valeur limite de température du palier pivotant et/ou la valeur de température de la broche (4).

11. Procédé, destiné à superviser la température d'au moins un palier pivotant d'une broche porte-outils d'une machine à travailler le bois, notamment selon l'une quelconque des revendications 1 à 8 ou 9 ou 10, lors duquel, à l'aide d'au moins un capteur de température (33, 34, 43, 49), l'on détecte en permanence la température du palier pivotant (17, 18) et on l'amène à au moins une unité d'évaluation, qui compare les signaux de température amenés avec au moins une valeur limite de température et génère un signal lorsque les signaux de température amenés atteignent la valeur limite de température, les données détectées par l'unité d'évaluation (13, 51) étant sauvegardées dans un cloud (55) dans lequel les valeur limites de température et/ou les données d'état de la machine à travailler le bois peuvent être sauvegardées, dans des intervalles de temps fixés, le système de commande (13) transférant des jeux de données dans le cloud (55) et les données pouvant être interrogées dans une forme traitée au moyen d'une application et/ou au moyen d'un navigateur (56) se trouvant dans un dispositif intelligent (57).

12. Procédé selon la revendication 11,
**caractérisé en ce que** lors d'un dépassement d'une valeur limite de température, le système de commande (13) transfère des jeux de données dans le cloud (55).

13. Procédé selon la revendication 11 ou 12,
**caractérisé en ce que** les données sont traitées dans le cloud (55) pour leur interrogation.

14. Procédé selon l'une quelconque des revendications 11 ou 13,
**caractérisé en ce que** le signal généré par l'unité d'évaluation déclenche un signal d'alerte ou un signal de mise à l'arrêt, par l'intermédiaire duquel des fonctions de la machine, comme des broches, une avance, sont mises à l'arrêt.

15. Procédé selon l'une quelconque des revendications 11 à 14,
**caractérisé en ce que** la température ambiante de la broche porte-outils {4) supervisée est détectée par au moins un capteur de température (43) supplémentaire et est mise à contribution pour la compensation de l'au moins une valeur limite de température et/ou de la valeur de température de la broche (4) et **en ce qu'**avantageusement, à l'atteinte de la valeur limite de température, un message (59') est envoyé au dispositif intelligent (57).

16. Procédé selon l'une quelconque des revendications 11 à 15,
**caractérisé en ce que** des messages {59') sont envoyés par le cloud (55) en mode push au dispositif intelligent (57).

17. Procédé selon la revendication 16,
**caractérisé en ce que** les messages (59') sont retransmis par courriel ou sous forme de SMS au dispositif intelligent (57).

18. Procédé selon l'une quelconque des revendications 11 à 17,
**caractérisé en ce que** les données et/ou les messages (59') ne sont retransférés qu'à des utilisateurs sauvegardés comme étant habilités ou ne peuvent être interrogé(e)s que par lesdits utilisateurs.
